# EUROPÄISCHE PATENTSCHRIFT

(11) **EP 2 907 123 B1**
(45) Veröffentlichungstag und Bekanntmachung des Hinweises auf die Patenterteilung: **07.12.2016**
(21) Anmeldenummer: 13776448.6
(22) Anmeldetag: 07.10.2013
(51) Int. Cl.: G08G 1/14

(54) **VERFAHREN, COMPUTERPROGRAMMPRODUKT UND ELEKTRONISCHE STEUEREINRICHTUNG ZUM AUFFINDEN EINES PARKPLATZES FÜR FAHRZEUGE**
METHOD, COMPUTER PROGRAM PRODUCT, AND ELECTRONIC CONTROL DEVICE FOR LOCATING A PARKING SPACE FOR VEHICLES
PROCÉDÉ, LOGICIEL INFORMATIQUE ET DISPOSITIF DE COMMANDE ÉLECTRONIQUE SERVANT À TROUVER UNE PLACE DE STATIONNEMENT POUR VÉHICULES

(30) Priorität: 09.10.2012 DE 102012218334
(43) Veröffentlichungstag der Anmeldung: 19.08.2015
(73) Patentinhaber: Bayerische Motoren Werke Aktiengesellschaft, 80809 München (DE)
(72) Erfinder: SCHULZ, Ralf, 82178 Puchheim (DE)
(86) Internationale Anmeldenummer: PCT/EP2013/070823
(87) Internationale Veröffentlichungsnummer: WO 2014/056843

(56) Entgegenhaltungen:
- WO-A1-2010/081563
- WO-A1-2012/141665
- DE-A1- 19 933 666
- DE-T2- 60 130 695
- US-A1- 2012 092 190

## Beschreibung

Die Erfindung betrifft ein Verfahren, ein Computerprogrammprodukt und eine elektronische Steuereinrichtung zum Auffinden eines Parkplatzes für Fahrzeuge. Insbesondere in Städten bestehen oft erhebliche Engpässe für Parkplätze, so dass die verfügbaren Parkplätze beispielsweise zu Stoßzeiten im Berufsverkehr oder an Wochenenden für die Fahrzeugführer nur schwierig aufzufinden sind. Dies führt oft dazu, dass die Fahrzeuge über längere Zeit für die Parkplatzsuche auf den städtischen Straßen bewegt werden müssen. Dadurch entsteht zusätzlicher Verkehr, der wiederum die Verkehrssituation insgesamt beeinträchtigt und zu Verkehrsstaus führen kann.

Aus der US 2010/0302068 A1 ist ein Suchsystem bekannt, bei dem Personen, die ein Fahrzeug von einem Parkplatz entfernen, diese Information über Mobilfunkgeräte an eine Informationsplattform melden, die anderen Mobilfunkbenutzern zugänglich ist. Ein Nutzer, der diese Information abruft, kann dann gezielt den als frei gemeldeten Parkplatz ansteuern. Die Kommunikation kann mittels sogenannter Apps über Smartphone Mobilfunkgeräte erfolgen. Dabei können zusätzlich deren GPS (Global Positioning System) Informationen verwendet werden um Suchergebnisse auf diejenigen als verfügbar gemeldeten Parkplätze einzugrenzen, die vom Parkplatz suchenden Nutzer in ausreichend kurzer Zeit erreichbar sind. Dadurch kann das Risiko vermindert werden, dass der Parkplatz zwischenzeitlich von einem anderen Fahrzeug zufällig belegt wird. Dennoch kann diese nachteilige Situation einer letztlich vergeblichen Parkplatzsuche und die damit einher gehende hohe Volatilität der zur Verfügung gestellten Parkplatz-Information nicht ausgeschlossen werden.

In der WO 03/039040 A1 ist ein Suchsystem zur Parkplatzsuche beschrieben, bei dem über einen Reservierungsserver vorab ein Parkplatz in einem vorbestimmten Bereich, beispielsweise in einem Parkhaus, gebucht werden kann. Mittels des Servers erfolgt eine Abfrage in einer Datenbank, ob für einen gewünschten Zeitraum ein Parkplatz zur Verfügung steht und ggf. werden für die Reservierung relevante Daten wie z.B. die Identifizierung des Fahrzeugs in der Datenbank gespeichert und die Reservierung bestätigt. Nachteilig ist dabei, dass ein solcher Reservierungsservice und der reservierte Stellplatz weitere aufwändige technische Maßnahmen einschließlich deren Wartung benötigen, z.B. für eine Einfahrtskontrolle, um die Reservierung sicherstellen zu können. Sie sind in der Regel zudem nachteilig, weil für den Parkplatz Suchenden mit teils erheblichen Parkgebühren verbunden, obwohl möglicherweise ein günstigerer Parkplatz, beispielsweise auf der Straße, verfügbar wäre.

Aus der WO 2012/092276 A2 ist ein Verfahren bekannt, bei dem jeweils die Wahrscheinlichkeit modelliert wird, mit der in einem Straßenzug ein Parkplatz verfügbar ist.

Aus der DE 601 30 695 T2 ist es bekannt, beispielsweise in einem Stadtviertel verfügbare Parkplätze mittels Parksäulen zu erfassen und die erfassten Daten an einen Parkserver zu übertragen. Die Daten können dann beispielsweise von einem Autofahrer mittels dessen Mobiltelefon über einen Verbindungsserver vom Parkserver abgerufen werden.

Aus der WO 2012/141665 A1 ist ein Parkinformationssystem bekannt, bei dem freie Parkplätze mittels Sensoren erfasst werden und entsprechende Daten an eine von einem Server gesteuerte Steuerungszentrale übertragen werden. Von dort kann ein Fahrzeugführer die Daten mittels eines geeigneten Abfragegeräts wie z.B. einem Smart Phone oder Computer abrufen.

Es ist Aufgabe der Erfindung, ein flexibles und zuverlässiges Auffinden eines Parkplatzes für Fahrzeuge in einem Zielgebiet zu ermöglichen.

Diese Aufgabe wird durch die in den unabhängigen Patentansprüchen angegebene Erfindung gelöst. Vorteilhafte Ausführungsformen der Erfindung sind in den abhängigen Ansprüchen angegeben.

Erfindungsgemäß sind zum Auffinden eines Parkplatzes für ein Fahrzeug in einem Zielgebiet folgende Merkmale vorgesehen:
- in einem Verbindungsserver sind dem Zielgebiet zugeordnete Verbindungsdaten zu mehreren Datenservern gespeichert, in denen jeweils Daten zu mindestens einem Parkplatz gespeichert sind,
- es wird eine Suchanforderung zum Auffinden eines Parkplatzes im Zielgebiet an den Verbindungsserver gerichtet und
- der Verbindungsserver stellt anhand der Zuordnungsdaten eine Verbindung zu den Datenservern her und fragt dabei ab, ob in der jeweiligen Datenbank Verfügbarkeitsdaten über verfügbare Parkplätze im Zielgebiet gespeichert sind. Falls Verfügbarkeitsdaten vorliegen, werden von den jeweiligen Datenservern Rückmeldungsdaten an den Verbindungsserver übertragen.

Die Abfrage des Verbindungsservers erfolgt derart mehrstufig, dass in einer ersten Abfrage-Stufe eine Vorauswahl der Datenserver getroffen wird, wobei erste, zielgebietsbezogene Parkplatzdaten vom Verbindungsserver angefragt werden und mit entsprechenden ersten Rückmeldungsdaten von den Datenservern beantwortet wird, ob der jeweilige Datenserver Parkplatzdaten zu dem Zielgebiet enthält. Dann wird auf Basis der ersten Rückmeldungsdaten und eines jeweiligen datenserverspezifischen Korrekturfaktors der zur Bewertung der Rückmeldungsdaten dynamisch verändert wird im Verbindungsserver entschieden, welche der jeweiligen Datenserver vorausgewählt werden. Dann wird aus den vorausgewählten Datenservern zumindest ein Datenserver als Auswahlserver ausgewählt.

In einer zweiten Abfrage-Stufe werden zu dem Auswahlserver jeweils zweite Rückmeldungsdaten abgerufen, die zumindest hinsichtlich des Parkplatzortes detaillierter sind als die jeweiligen ersten Rückmeldungsdaten.

Die erfindungsgemäßen Merkmale können in einem Verfahren, in einem Computerprogrammprodukt und/oder in einer elektronischen Steuereinrichtung verwirklicht werden.

Erfindungsgemäß wurde erkannt, dass es für eine effiziente Parkplatz- Suche und -Zuweisung von Vorteil ist, verschiedene Suchsysteme bzw. deren Datenserver technisch derart zu kombinieren, dass es ermöglicht wird, für eine Suchanfrage jeweils den nach vorgegebenen Suchkriterien am besten geeigneten Datenserver bzw. den Suchanbieter auszuwählen, der diesen Datenserver betreibt. Dazu kann weiterhin vorteilhaft vorgesehen sein, dass im Verbindungsserver die anonymen Rückmeldungsdaten bewertet werden und anhand der Bewertung ein Vergleich der Rückmeldungen von verschiedenen Suchsystemen bzw. in diesen verwendeten Datenbanken erfolgt. Die Bewertung der anonymen und/oder detaillierten Rückmeldungsdaten erfolgt dabei auf Basis eines datenserverspezifischen Korrekturfaktors, der im Verbindungsserver dynamisch verändert wird, wobei jeweils zumindest eine im Zuge des Auffindens des Parkplatzes ermittelte Kenngröße zum Verändern verwendet wird. Die Kenngröße kann automatisch ermittelt werden z.B. anhand einer per GPS erhaltenen Information oder mittels Daten aus dem Fahrzeugbetrieb wie z.B. der Laufzeit des Motors bis zum Abstellen oder die bis zum Parkplatz gefahrene Strecke seit dem Empfang der vollständigen Parkplatzinformation. Wenn das Fahrzeug tatsächlich zu dem ermittelten Ort des Parkplatzes gefahren ist, aber dort nicht für eine gewisse Zeit abgestellt worden ist, dann wäre dies beispielsweise ein Zeichen dafür, dass die Parkplatz-Information nicht zutreffend war. Der dem betreffenden Datenserver zugeordnete Korrekturfaktor wird dann entsprechend einer geringeren Zuverlässigkeit herabgestuft. Die Veränderung des Korrekturfaktors kann auch nach statistischen Methoden aus einer Vielzahl von Suchanfragen erfolgen.

Mit der Erfindung wird weiterhin vorteilhaft eine zweistufige Abfrage durchgeführt, durch die einerseits eine Begrenzung der Datenmengen erfolgen kann, weil nicht automatisch sämtliche verfügbaren Daten aller Suchanbieter übertragen werden müssen, sondern nur ausgewählte Daten. Die Rückmeldungsdaten der ersten Abfragestufe können die Verfügbarkeitsdaten und/oder davon abgeleitete Daten sein. Als erste Rückmeldungsdaten können beispielsweise eine erwartete ParkplatzSuchzeit vorgesehen sein, Daten zur Entfernung vom Zielort, oder Daten über die mit dem Suchdienst verbundenen Kosten und/oder Parkgebühren. Durch die Begrenzung der Datenmengen in der ersten Abfragestufe können insbesondere Kosten und Auslastung für Mobilfunk-Netzwerke eingespart werden, über die eine Verbindung zwischen dem Verbindungsserver und einem im Fahrzeug vorgesehenen Daten-Endgerät wie z.B. Navigationssystem oder PDA (Personal Digital Assistant), hergestellt wird, von dem die Suchanforderung zum Auffinden des Parkplatzes im Zielgebiet an den Verbindungsserver gerichtet wird.

Die ersten Rückmeldungsdaten umfassen insbesondere keine Daten über den genauen Parkplatzort. Dadurch kann sichergestellt werden, dass seitens des Benutzers eine konkret dokumentierte Auswahl des Suchanbieters getroffen wird, sowie die zweite Abfragestufe durchgeführt wird, in der beispielsweise konkrete Reservierungsdaten eines Parkhauses erzeugt und dann als zweite Rückmeldungsdaten übertragen werden, bevor der Parkplatz angesteuert wird. Die Rückmeldungsdaten der zweiten Abfragestufe können den genauen Parkplatzort anhand von GPS-Koordinaten bestimmen, ein Bild des Parkplatzes bzw. der Parkplatzumgebung repräsentieren und/oder eine Text- Beschreibung hinsichtlich des Parkplatzes und/oder anderer Informationen enthalten.

In einem weiteren vorteilhaften Ausführungsbeispiel richtet der Verbindungsserver unabhängig von einer Suchaufforderung in vorgegebenen Zeitabständen Abfragen an die Datenserver zur Verfügbarkeit von Rückmeldungsdaten in vorgegebenen Zielgebieten. Dies ist besonders dann vorteilhaft, wenn im Verbindungsserver eine offene Schnittstelle derart vorgesehen ist, dass Suchanbieter ihre jeweiligen Datenserver zum Anbieten ihres Suchdienstes selbständig an den Verbindungsserver koppeln können, beispielsweise durch einfaches Speichern einer Netzwerkadresse des Datenservers im Verbindungsserver, beispielsweise einer Internet-Netzwerkadresse. Der Verbindungsserver und die Datenserver können dann über die Schnittstelle und/oder jeweils in ihnen gespeicherte und geladene Computerprogramm-Module so zusammen wirken, dass der Verbindungsserver in den vorgegebenen Zeitabständen, z.B. täglich, wöchentlich oder monatlich automatisch alle gespeicherten Datenserver abfrägt, ob und ggf. zu welchen Zielgebieten sie entsprechende Daten enthalten. Der Datenaustausch einer solchen, allgemeinen Verfügbarkeits-Abfrage kann zumindest teilweise so wie in der oben beschriebenen ersten Abfragestufe einer konkreten Parkplatzsuche erfolgen. Der Verbindungsserver kann anhand von im Fahrzeug eingestellten Kriterien ausgewählt werden.

Art, Format und Umfang der Daten zwischen dem Verbindungsserver und den Datenservern werden vorzugsweise vorab festgelegt, wobei ein Mindestumfang von Daten und/oder ein Höchstumfang von Daten festlegbar sind. Zwischen dem Verbindungsserver und dem im Fahrzeug befindlichen Endgerät kann ebenfalls der Datenumfang festgelegt werden, so dass der Bediener des Endgeräts unabhängig vom ausgewählten Suchanbieter jeweils einen einheitlichen Datenumfang über eine einheitliche Bedienoberfläche erhalten kann. Vorteilhaft ist dabei weiter, dass der Benutzer nicht mit unterschiedlichen Systemen verschiedener Suchanbieter konfrontiert wird, sondern lediglich einen Ansprechpartner mit dessen System benötigt, der als einheitliche Schnittstelle fungiert und ihm eine bestimmte Qualität des Suchservices garantieren kann.

In einem weiteren vorteilhaften Ausführungsbeispiel werden aus den zweiten Rückmeldungsdaten zumindest Positionsdaten (Koordinaten) des Parkplatzes an ein im Fahrzeug vorgesehenes Navigationssystem übertragen. Das Navigationssystem kann dann direkt die Route zu dem Parkplatz ermitteln und die Route auf einem Display anzeigen.

Im Folgenden werden Ausführungsbeispiele der Erfindung anhand von Figuren näher erläutert. Es zeigen:
Figur 1 eine Struktur von Steuerungscomputern und
Figur 2 ein Ablaufdiagramm für einen Suchvorgang.

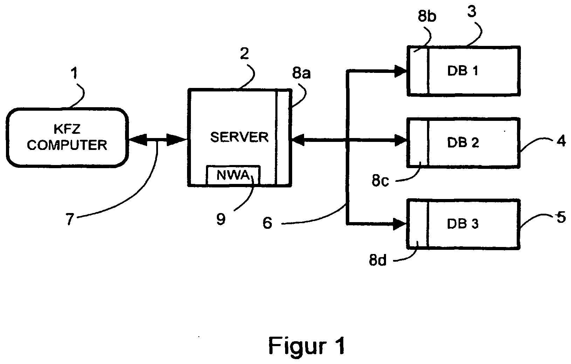

In der in Figur 1 dargestellten Struktur ist ein Fahrzeug-Computer 1 mit einem Navigationsystem eines Fahrzeugs vorgesehen, über das Parkplatz-Suchanfragen erstellt und Suchergebnisse angezeigt werden können. Der Fahrzeug-Computer 1 bzw. das Navigationssystem 1 kann fest in das Fahrzeug, zum Beispiel einem PKW oder LKW, eingebaut sein oder auch als Mobilgerät, z.B. in Form eines PDA in dem Fahrzeug mitgeführt werden. Weiterhin ist ein Verbindungsserver 2 gezeigt, der in einem Rechenzentrum vorgesehen ist und mit mehreren dezentralen Datenservern, von denen drei Datenserver 3, 4, 5 exemplarisch dargestellt sind, über Netzwerkverbindungen 6 verbunden ist. Die Netzwerkverbindungen 6 können jeweils ganz oder teilweise drahtlos oder drahtgebunden sein, wahlweise gesichert oder ungesichert und können beispielsweise über das Internet hergestellt werden. Dazu sind die Internet-Adressen der Datenserver 3, 4, 5 in einem Adress-Speicher 9 des Verbindungsservers 2 gespeichert. Die Verbindung zwischen dem Fahrzeug-Computer 1 und dem Verbindungsserver 2 wird über eine drahtlose Mobilfunk- und/oder Internet-Verbindung 7 hergestellt. Im Hinblick auf den Datentransfer zwischen dem Fahrzeug-Computer 1 und den Datenservern 3, 4, 5 wirkt der Verbindungsserver 2 als Stellvertreter (proxy), d.h., der Fahrzeug-Computer 1 kommuniziert nur mit dem Verbindungsserver 2 direkt, aber nicht mit den Datenservern 3, 4, 5.

Mit dem nachfolgend beschriebenen Verfahren können verschiedene Dienstleistungen (Services) mit gleichem Anwendungsgebiet, in diesem Beispiel Parkplatzsuchdienste, aber unterschiedlicher (heterogener) Umsetzung mit einer einheitlichen Oberfläche bedient werden. Der Nutzer der Services kommuniziert mittels seines Fahrzeug-Computers 1 direkt mit dem Verbindungsserver 2 und wird nicht damit konfrontiert, mit der heterogenen Vielzahl von Datenservern 3, 4, 5 kommunizieren zu müssen. Qualitätssicherung und Abwicklung der Suchanfragen erfolgen zentral im Verbindungsserver 2.

Verschiedene Suchanbieter, die die Datenserver 3, 4, 5 betreiben, können ganz verschiedenartige Parkplatz-Suchdienste anbieten, beispielsweise als Parkhausbetreiber online eine gebührenpflichtige Buchung eines Parkplatzes ermöglichen und dabei ein Abrechnungssystem in die Suche mit einzubinden oder als öffentliche kostenlose Portale, die freie Parkplätze in Echtzeit anzeigen, oder als Privatpersonen, die ihren eigenen Stellplatz kurzfristig vermieten. Es können auch Suchanbieter mit automatischen, statistischen Crowd-Sourcing-Ansätzen vorgesehen sein, die ein selbstmodifizierendes Modell über das Parkverhalten verwenden, um Navigationsrouten zu berechnen, entlang derer die Wahrscheinlichkeit für einen freien Platz möglichst hoch ist.

Suchanbieter können insbesondere die in den eingangs erwähnten Veröffentlichungen beschriebenen Verfahren zur Suche und/oder Zuweisung verfügbarer Parkplätze verwenden. Deren Inhalt wird deshalb an dieser Stelle nochmals in Bezug genommen.

Die Datenserver 3, 4, 5 der Suchanbieter werden über deren Netzwerk-Schnittstellen 8b, 8c, 8d nach einer Suchanfrage über den Verbindungscomputer 2 (Proxy) und dessen Netzwerk-Schnittstelle 8a mit dem Fahrzeug-Computer 1 selektiv verbunden. Dabei kommuniziert der Fahrzeug-Computer 1 mit den Datenservern 3, 4, 5 der verschiedenen Anbieter nicht, sondern mit nur dem Verbindungscomputer 2. Dieser Steuerrechner 2 kann dann Anfragen des Kunden an die mit ihm verbundenen Rechner 3, 4, 5 von Parkplatzsuchdiensten weiterleiten. Die Registrierung eines neuen Datenservers eines Parkplatzdienstes kann durch diesen einfach erfolgen, indem er die im Verbindungsserver 2 definierten Schnittstellen unterstützt, wobei die Netzwerkadresse des neuen Datenservers im Verbindungsserver 2 abgespeichert wird, sowie verschiedene Angaben über den Umfang der Suchdienstleistung, z.B. über das räumliche Gebiet, das der Suchdienst abdeckt, die Art des Suchdienstes, garantierter Stellplatz, statistische Auswahl öffentlicher Parkplätze usw.

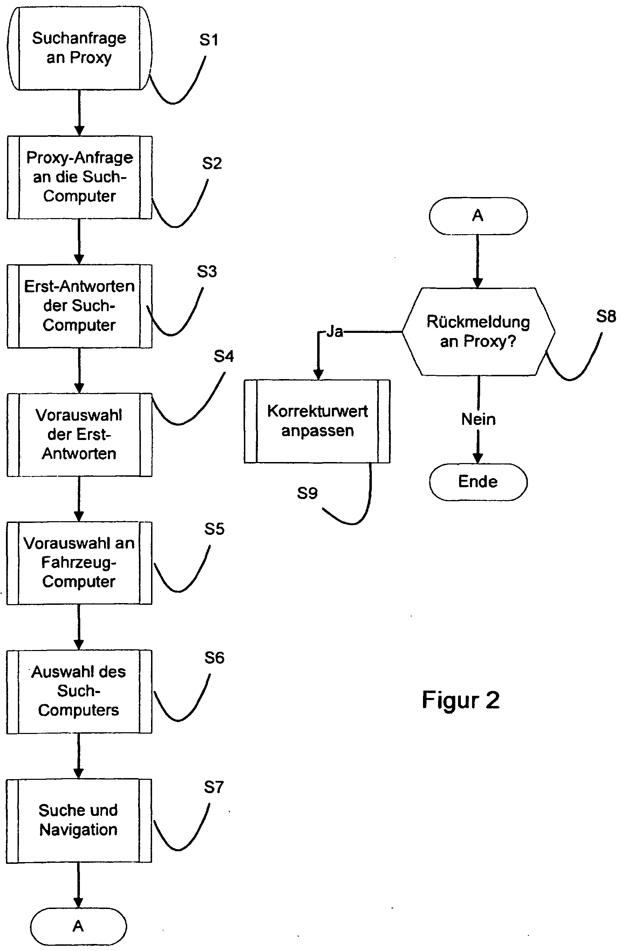

Die Art und Weise, wie die Parkplatzsuche abgewickelt und an den Fahrzeug-Computer 1 gemeldet wird, lässt sich anhand der Figur 2 wie folgt darstellen:
Am Fahrzeug-Computer 1 spezifiziert ein Bediener beispielsweise über ein graphisches Bedienfeld, dass er einen Parkplatz suchen möchte, z.B. mit Angabe von Ort und Uhrzeit. Dies kann auch nach einem einzigen Knopfdruck automatisch geschehen, wenn sich z.B. Ort und Uhrzeit aus der aktuellen Routenführung (Ziel und ungefähre Ankunftszeit) eines Navigationssystems des Fahrzeug-Computers 1 ergeben, oder manuell durch Eingabe der entsprechenden Daten. Dabei können weitere Suchkriterien eingegeben werden wie z.B. Reservierung in einem Parkhaus oder Suche nach einem öffentlichen gebührenfreien Parkplatz, ob ein Parkplatz in möglichst kurzer Zeit oder in möglichst geringer Entfernung zum Ziel gesucht werden soll, ob der Parkplatz möglichst kostengünstig oder mit möglichst hoher Verfügbarkeit oder bis zu einer maximalen Gebühr gesucht werden soll, welcher Fahrzeugtyp bzw. welche Fahrzeuggröße (z.B. Kleinwagen, Mittelklassewagen, SUV, LKW) geparkt werden soll usw. Dadurch ist eine Optimierung der Suche und eine konkrete Bewertung des Suchergebnisses seitens des Benutzers möglich.

Die Suchanfrage wird im Schritt S1 an den Verbindungsserver 2 (Proxy) beispielsweise über ein Funknetz übertragen. Dieser kontaktiert alle zur Verfügung stehenden Datenserver 3, 4, 5 verschiedener Suchdienst-Anbieter. Um insbesondere zu übertragende und zu verarbeitende Datenmengen gering zu halten, erfolgt die Kommunikation zwischen Verbindungsserver 2 und den Datenservern 3, 4, 5 stufenweise (kaskadiert) wie folgt:
Im Schritt 2 erfolgt vom Proxy 2 über die angeschlossenen Datenserver 3, 4, 5 jeweils eine erste, grobe Anfrage an die jeweiligen Suchanbieter, ob bei ihnen für das Zielgebiet eine Abdeckung besteht (erste Stufe der Kaskade). Diese Anfrage kann alternativ so gestaltet werden, dass der Proxy 2 unabhängig von Benutzeranfragen in regelmäßigen Abständen die Dienstanbieter befragt, welches Gebiet sie jeweils abdecken. Die Abdeckungs-Informationen werden dann im Proxy 2 gespeichert und bei Suchanfragen direkt verwendet um zu entscheiden, an welchen der Datenserver 3, 4, 5 eine Suchanfrage jeweils gerichtet wird.

Im Schritt S3 melden die Datenserver 3, 4, 5 der verschiedenen Anbieter auf die Anfrage in Erst-Antworten mit begrenzten Informationen. Diese Informationen enthalten noch nicht den konkreten Parkplatzort, können aber umfassen:
- Erwartete Parkplatzsuchzeit
- Erwartete Entfernung vom Zielort
- Erwartete Kosten (z.B. für Parkhausbenutzung)
- Weitere Informationen, z.B. Parkplatz bewacht / nicht bewacht, überdacht / nicht überdacht, Parkplatz reserviert / frei / nur mit gewisser Wahrscheinlichkeit frei.

Anhand dieser Informationen wird im Verbindungsserver 2 im Schritt S4 eine Vorauswahl der Suchdienste getroffen. Dazu werden die Antwortinformationen zunächst mit einem Korrekturfaktor κ multipliziert, der die durchschnittliche Abweichung der jeweiligen Kennzahlen vom tatsächlichen ermittelten Wert des jeweiligen Dienstes kennzeichnet. Diese korrigierten Informationen werden verwendet, um die Suchqualität des Anbieters einzustufen. Zudem kann eine Auswahl und Einstufung der Anbieter in Abhängigkeit der anfangs vom Bediener gewählten Such-Optionen wie Parkhaus, öffentlicher Parkplatz etc. erfolgen.

Die Informationen der ausgewählten Suchdienste werden ggf. in der eingestuften Reihenfolge vom Verbindungsserver 2 im Schritt S5 an den Fahrzeug-Computer 1 weiter geleitet und dort angezeigt. Dort wird im Schritt S6 ein konkreter Suchanbieter ausgewählt und die detaillierte Suchanfrage (zweite Stufe der Kaskade) über den Verbindungsserver 2 an den entsprechenden Datenserver 3, 4, 5 übermittelt. Im Schritt S6 werden im betreffenden Datenserver 3, 4, 5 die Daten zu dem in der Suche ermittelten Parkplatzort an den Fahrzeug-Computer 1 zurück gemeldet und dort für die Navigation des Fahrzeugs an den Parkplatz verwendet.

Nachdem der Parkplatz mit dem Fahrzeug angesteuert wurde, wird im Schritt S8 entschieden, ob vom Fahrzeug-Computer 1 Kenndaten zur Parkplatzsuche wie z.B. zur tatsächlichen Verfügbarkeit des Parkplatzes, der Entfernung zum Zielort, Suchzeit, an den Verbindungscomputer 2 zurück übertragen werden. Diese Kenndaten werden wiederum verwendet, um den oben erwähnten Korrekturwert κ für den Anbieter im Schritt S9 anzupassen. Die Korrekturwert-Anpassung kann mit statistischen Methoden erfolgen.

Beispiel für die Korrekturwert-Anpassung:
Ein Anbieter behauptet von seinem Parkplatz, dass er in d = 100 m Entfernung zum Ziel liegen wird. Der Korrekturfaktor κ für diesen Anbieter beträgt aufgrund von bislang 200 Suchvorgängen 1,5. Im Fahrzeug-Computer 1 wird dieser Service deshalb als ein Parkplatz mit 150 m Entfernung vom Ziel angezeigt, entsprechend dκ = 100 m * 1,5. Dieser Wert wird mit den entsprechenden Werten aller anderen Suchdienste verglichen. In diesem Beispiel sei 150 m der kleinste Wert aller Anbieter. Tatsächlich liegt der gefundene Parkplatz 250 m vom Ziel entfernt. Für diesen einen Fall beträgt die Abweichung also 2,5 gegenüber der Zielentfernung. Der Korrekturfaktor wird demzufolge korrigiert auf (200 * 1,5 + 2.5) / 201 = 1,51 bei nunmehr 201 Suchvorgängen.

Das Beispiel zeigt, dass sich ebenfalls empfiehlt, die Streubreite zu erfassen und das Verfahren so zu erweitern, dass der für den Benutzer angezeigte Wert nicht dem Erwartungswert entspricht (also 150 m in diesem Beispiel), sondern der Wert mit einen um n Standardabweichungen korrigierten Korrekturfaktor berechnet wird als d(κ + n σ) Beträgt die Standardabweichung des Korrekturfaktors z.B. 0,5 und wäre n = 1, dann ergäbe sich die Anzeige von 200 m.

Das Korrekturverfahren lässt sich prinzipiell beliebig verfeinern. Beispielsweise könnte für alle Werte aus dem Schritt S4 ein einziger Korrekturfaktor verwendet werden, oder für jeden dieser Werte ein eigener Korrekturfaktor. Es könnte jeweils nur ein selektiver Korrekturfaktor korrigiert werden, der für eine konkrete Suche als entscheidend ausgewählt bzw. mit einem hohen Prioritätsfaktor versehen ist. Wenn z.B. die Nähe zu einem bestimmten Ziel mit hoher Priorität versehen wird, dann könnte nur der Korrekturfaktor für die Entfernung geändert werden, nicht aber der für die Zeit. Alternativ könnten alle Werte geändert werden.

Die Formel für die Korrektur oder die Änderung des Korrekturfaktors könnte komplizierter ausfallen. Zum Beispiel könnten bestimmte Anbieter bestimmte Gegenden als besonders gut abgedeckt darstellen, andere Gegenden als im Aufbau begriffen und dem entsprechend für unterschiedlichen Gegenden unterschiedliche Streubreiten bzw. Korrekturfaktoren vorgesehen sein.

Die Korrekturfaktoren könnten aufgrund eines gleitenden Mittelwertes berechnet werden statt wie dargestellt aufgrund eines absoluten Mittelwertes. So würden auch zeitliche Variationen mit einfließen. Suchanbieter mit zu hohen Standardabweichungen oder zu hohen Korrekturfaktoren könnten dann von der Suche ausgeschlossen werden.

Die oben beschriebenen computergesteuerten Systeme können an sich bekannte technische Einrichtungen wie z.B. Eingabemittel in Form von Tastatur, Maus, Touchscreen, JoyStick oder Sprachsteuerung aufweisen, sowie einen Mikroprozessor, einen Daten- bzw. Steuerungsbus, eine Anzeigeeinrichtung (Screen- oder Projektions-Display) sowie einen Arbeitsspeicher, einen Festspeicher, eine Netzwerk,- und/oder Mobilfunkkarte für kabelgebundene und/oder drahtlose Netzwerkverbindungen. Ein entsprechendes Computerprogrammprodukt kann in einem Arbeits- und/oder Festspeicher des jeweiligen computergesteuerten Systems gespeichert und geladen werden und durch den Mikroprozessor ausgeführt werden. Es kann aber auch unabhängig davon als Datei z.B. per Download von einem Datenserver oder auf einem Datenträger vorliegen oder jeweils teilweise auf verschiedenen der beteiligten Systeme gespeichert, geladen und ausgeführt werden. Dazu kann das Computerprogrammprodukt modular aufgebaut sein und einzelne Module jeweils auf verschiedenen der beteiligten Computersysteme geladen und/oder ausgeführt werden.

## Patentansprüche

1. Verfahren zum Auffinden eines Parkplatzes für ein Fahrzeug in einem Zielgebiet, wobei
- ein Verbindungsserver (2) vorgesehen ist, in welchem dem Zielgebiet zugeordnete Verbindungsdaten zu mehreren Datenservern (3, 4, 5) gespeichert sind, in denen jeweils Daten zu mindestens einem Parkplatz gespeichert sind,
- eine Suchanforderung zum Auffinden eines Parkplatzes im Zielgebiet an den Verbindungsserver (2) gerichtet wird,
- der Verbindungsserver (2) anhand der Zuordnungsdaten eine Verbindung zu den Datenservern (3, 4, 5) herstellt und dabei abfrägt, ob in der jeweiligen Datenbank Verfügbarkeitsdaten über verfügbare Parkplätze im Zielgebiet gespeichert sind und falls Verfügbarkeitsdaten vorliegen, von den jeweiligen Datenservern (3, 4, 5) Rückmeldungsdaten an den Verbindungsserver (2) übertragen werden,
- wobei die Abfrage des Verbindungsservers (2) derart mehrstufig erfolgt, dass
-- in einer ersten Abfrage-Stufe eine Vorauswahl der Datenserver (3, 4, 5) getroffen wird, wobei erste, zielgebietsbezogene Parkplatzdaten vom Verbindungsserver (2) angefragt werden und mit entsprechenden ersten Rückmeldungsdaten von den Datenservern (3, 4, 5) beantwortet wird, ob der jeweilige Datenserver Parkplatzdaten zu dem Zielgebiet enthält,
-- auf Basis der ersten Rückmeldungsdaten und eines jeweiligen datenserverspezifischen Korrekturfaktors, der zur Bewertung der Rückmeldungsdaten dynamisch verändert wird im Verbindungsserver (2) entschieden wird, welche der jeweiligen Datenserver (3, 4, 5) vorausgewählt werden,
-- aus den vorausgewählten Datenservern (3, 4, 5) zumindest ein Datenserver (3, 4, 5) als Auswahlserver ausgewählt und in einer zweiten Abfrage-Stufe zu dem Auswahlserver jeweils zweite Rückmeldungsdaten abgerufen werden, die zumindest hinsichtlich des Parkplatzortes detaillierter sind als die jeweiligen ersten Rückmeldungsdaten.

2. Verfahren nach Anspruch 1, **dadurch gekennzeichnet, dass** der Korrekturfaktor im Verbindungsserver (2) dynamisch verändert wird, wobei jeweils zumindest eine beim Auffinden des Parkplatzes ermittelte Kenngröße zum Verändern verwendet wird.

3. Verfahren nach Anspruch 1 oder 2, **dadurch gekennzeichnet, dass** für die Entscheidung im Verbindungsserver (2), welche den jeweiligen Datenserver (3, 4, 5) vorauswählt, die ersten, so genannten anonymen Rückmeldungsdaten im Verbindungsserver (2) bewertet werden, wobei die Bewertung auf Basis des jeweiligen datenserverspezifischen Korrekturfaktors erfolgt und dass anhand der Bewertung ein Vergleich der Rückmeldungen von verschiedenen Datenservern (3, 4, 5) erfolgt.

4. Verfahren nach Anspruch 3, wobei die Veränderung des Korrekturfaktors auf Basis einer Vielzahl von mit dem jeweiligen Datenserver (3, 4, 5) abgeschlossenen Suchvorgängen für Parkplätze, insbesondere des Zielgebiets, nach mindestens einer statistischen Methode erfolgt.

5. Verfahren nach einem der vorher gehenden Ansprüche, wobei der Verbindungsserver (2) unabhängig von einer Suchaufforderung in vorgegebenen Zeitabständen Abfragen an die Datenserver (3, 4, 5) zur Verfügbarkeit von Rückmeldungsdaten in vorgegebenen Zielgebieten richtet.

6. Verfahren nach einem der vorher gehenden Ansprüche, wobei am Verbindungsserver (2) eine offene Netzwerkschnittstelle vorgesehen ist, über die Datenserver (3, 4, 5) registrierbar und über eine Netzwerkverbindung (6) ankoppelbar sind.

7. Verfahren nach einem der vorher gehenden Ansprüche, wobei die Auswahl des Verbindungsservers (2) anhand von im Fahrzeug (1) eingestellten Kriterien erfolgt.

8. Verfahren nach einem der vorher gehenden Ansprüche, wobei die Suchanforderung zum Auffinden des Parkplatzes im Zielgebiet von einer im Fahrzeug befindlichen elektronischen Steuereinrichtung (1) an den Verbindungsserver (2) gerichtet wird.

9. Verfahren nach Anspruch 8, wobei die Steuereinrichtung (1) ein im Fahrzeug befindliches Navigationsgerät ist, zumindest ein Teil der zweiten Rückmeldungsdaten Positionsdaten des Parkplatzes sind und die Positionsdaten in das Navigationsgerät eingespielt und von diesem zur Routenführung verwendet werden.

10. Computerprogrammprodukt, das beim Laden und Ausführen auf mindestens einem Computer (1, 2, 3, 4, 5) einen Verfahrensablauf nach einem der vorher gehenden Ansprüche bewirkt.

11. Elektronische Steuereinrichtung, in die ein Computerprogrammprodukt nach Anspruch 10 geladen ist.

## Claims

1. A method for finding a parking space for a vehicle in a target area, wherein
- a connection server (2) is provided in which are stored connection data, associated with the target area, for a plurality of data servers (3, 4, 5), each of which stores data relating to at least one parking space,
- a search request to find a parking space in the target area is addressed to the connection server (2),
- the connection server (2) establishes a connection to the data servers (3, 4, 5) using the associated data, and queries whether availability data concerning available parking spaces in the target area are stored in the respective database and, if availability data are present, feedback data are transmitted to the connection server (2) from the respective data servers (3, 4, 5),
- wherein the query from the connection server (2) takes place in several stages such that
-- - in a first query stage, a preselection of the data servers (3, 4, 5) is made, first parking space data relating to the target area being requested by the connection server (2) and corresponding first feedback data from the data servers (3, 4, 5) being used to respond to the query whether the respective data server contains parking space data relating to the target area,
- based on the first feedback data and on a respective correction factor which is specific to the data server and is changed dynamically to assess the feedback data, a decision is made in the connection server (2) as to which of the respective data servers (3, 4, 5) are preselected,
- at least one data server (3, 4, 5) is selected as the selected server from the preselected data servers (3, 4, 5) and in a second query stage addressed to the selected server, second feedback data which are more detailed than the respective first feedback data at least in terms of the parking space location are respectively retrieved.

2. A method according to claim 1, **characterised in that** the correction factor is changed dynamically in the connection server (2), at least one characteristic variable, which is determined while locating the parking space, being respectively used for dynamically changing the correction factor.

3. A method according to claim 1 or claim 2, **characterised in that** the first, so-called anonymous feedback data are assessed in the connection server (2) for the decision in the connection server (2), which decision preselects the respective data server (3, 4, 5), the assessment being made on the basis of the respective correction factor specific to the data server, and **in that** the feedback from different data servers (3, 4, 5) is compared based on the assessment.

4. A method according to claim 3, wherein the correction factor is changed based on a plurality of search procedures for parking spaces, more especially of the target area, which search procedures are completed by the respective data server (3, 4, 5), according to at least one statistical method.

5. A method according to any one of the preceding claims, wherein within predetermined time intervals and independently of a search request, the connection server (2) addresses queries to the data servers (3, 4, 5) concerning the availability of feedback data in predetermined target areas.

6. A method according to any one of the preceding claims, wherein provided on the connection server (2) is an open network interface, via which the data servers (3, 4, 5) can be registered and can be coupled via a network connection (6).

7. A method according to any one of the preceding claims, wherein the selection by the connection server (2) takes place based on criteria set in the vehicle (1).

8. A method according to any one of the preceding claims, wherein the search request to find the parking space in the target area is addressed to the connection server (2) by an electronic control device (1) located in the vehicle.

9. A method according to claim 8, wherein the control device (1) is a navigation device located in the vehicle, at least some of the second feedback data are position data of the parking space and the position data are input into the navigation device and are used by said navigation device for routing.

10. A computer program product which, upon loading and executing on at least one computer (1, 2, 3, 4, 5), triggers a process sequence according to any one of the preceding claims.

11. An electronic control device, into which a computer program product according to claim 10 is loaded.

## Revendications

1. Procédé destiné à permettre de trouver un emplacement de stationnement pour un véhicule dans une zone cible, selon lequel il est prévu un serveur de liaison (2) dans lequel sont enregistrées des données de liaison associées à la zone cible concernant plusieurs serveurs de données (3, 4, 5) dans lesquels sont respectivement enregistrées des données concernant au moins un emplacement de stationnement,
une demande de recherche pour trouver un emplacement de stationnement dans la zone cible est dirigée vers le serveur de liaison (2),
le serveur de liaison (2) réalise à partir des données d'association une liaison avec les serveurs de données (3, 4, 5) et demande si dans la banque de données respective sont enregistrées des données de disponibilité concernant des emplacements de stationnement disponibles dans la zone cible, et, s'il existe des données de disponibilité, des données de réponse en retour sont transmises par les serveurs de données respectifs (3, 4, 5) au serveur de liaison (2),
l'interrogation du serveur de liaison (2) est effectuée en plusieurs étapes selon lesquelles :
dans une première étape d'interrogation, une présélection du serveur de données (3, 4, 5) est effectuée, des premières données d'emplacement de stationnement concernant la zone cible étant demandées par le serveur de liaison (2) et les serveurs de données (3, 4, 5) répondant avec des premières données de réponse en retour correspondantes indiquant si le serveur de données respectif renferme des emplacements de stationnement concernant la zone cible,
sur le fondement des premières données de réponse en retour et d'un facteur de correction spécifique au serveur de données respectif qui est modifié dynamiquement pour évaluer les données de réponse en retour,
il est décidé dans le serveur de liaison (2), lesquels parmi les serveurs de données respectifs (3, 4, 5) seront présélectionnés,
à partir des serveurs de données (3, 4, 5) présélectionnés, au moins un serveur de données (3, 4, 5) est sélectionné en tant que serveur de sélection, et est, dans une seconde étape d'interrogation, sont extraites du serveur de sélection des secondes données de réponse en retour respectives qui sont plus détaillées que les premières données de réponse de retour respectives au moins concernant le lieu de l'emplacement de stationnement.

2. Procédé conforme à la revendication 1,
**caractérisé en ce que**
le facteur de correction est modifié dynamiquement dans le serveur de liaison (2), au moins une grandeur caractéristique respectivement déterminée lors de la découverte de l'emplacement de stationnement étant utilisée pour effectuer la modification.

3. Procédé conforme à la revendication 1 ou 2,
**caractérisé en ce que**
pour décider dans le serveur de liaison (2) lequel des serveurs de données respectifs (3, 4, 5) sera présélectionné, les premières données de réponse en retour considérées comme anonymes sont évaluées dans le serveur de liaison (2), l'évaluation étant effectuée à partir du facteur de correction spécifique au serveur de données respectif, et, sur le fondement de l'évaluation une comparaison des données de réponse en retour des différents serveurs de données (3, 4, 5) est effectuée.

4. Procédé conforme à la revendication 3,
selon lequel la modification du facteur de correction est effectuée à partir d'une série de processus de recherche d'emplacement de stationnement en particulier de la zone cible, effectués avec chaque serveur de données (3, 4, 5), selon au moins une méthode statistique.

5. Procédé conforme à l'une des revendications précédentes,
selon lequel le serveur de liaison (2) adresse, indépendamment d'une demande de recherche, dans des intervalles de temps prédéfinis des interrogations aux serveurs de données (3, 4, 5) concernant la disponibilité de données de réponse en retour dans des zones cibles prédéfinies.

6. Procédé conforme à l'une des revendications précédentes,
selon lequel il est prévu sur le serveur de liaison (2) une interface de réseau ouverte par l'intermédiaire de laquelle les serveurs de données (3, 4, 5) peuvent être enregistrés et couplés par l'intermédiaire d'une liaison avec le réseau (6).

7. Procédé conforme à l'une des revendications précédentes,
selon lequel la sélection du serveur de liaison (2) est effectuée sur le fondement de critères réglés dans le véhicule (1).

8. Procédé conforme à l'une des revendications précédentes,
selon lequel la demande de recherche pour trouver l'emplacement de stationnement dans la zone cible est adressée au serveur de liaison (2) par un dispositif de commande électronique (1) monté dans le véhicule.

9. Procédé conforme à la revendication 8,
selon lequel le dispositif de commande (1) est un appareil de navigation monté dans le véhicule, au moins une partie des secondes données de réponse en retour sont des données de position de l'emplacement de stationnement et les données de position sont téléchargées dans l'appareil de navigation et utilisées par celui-ci pour permettre le guidage.

10. Produit-programme d'ordinateur effectuant par chargement et exécution sur au moins un calculateur (1, 2, 3, 4, 5) la mise en oeuvre d'un procédé conforme à l'une des revendications précédentes.

11. Installation de commande électronique dans laquelle est chargé un produit-programme d'ordinateur conforme à la revendication 10.
